# EUROPEAN PATENT APPLICATION

(11) **EP 2 161 142 A1**
(43) Date of publication of application: **10.03.2010**
(21) Application number: 08105238.3
(22) Date of filing: 04.09.2008
(51) Int. Cl.: B60B 31/00, B60B 31/02

(54) **Device for stabilizing a spoked wheel**

(71) Applicant: Holland Mechanics BV, 1440 AJ Purmerend (NL)
(72) Inventor: Cruyff, Marcel, 1127PH DEN ILP (NL)
(74) Representative: Uittenbogaart, Gustaaf Adolf

(57) **Abstract**

The invention concerns a device for stabilizing a spoked wheel with a centreline (10) and spokes (6) mounted between a hub (7) and a rim (3) by screwing nipples on the spokes (6) comprising means for increasing and reducing the tension in the spokes (6). In accordance with the invention the means for increasing and reducing the tension comprises two sets of flex rollers (1,8) that can press in opposite direction parallel to the centreline (10) against the rim (3) wherein the flex rollers (1,8) on one side of the rim (3) press against the rim (3) more or less halfway between the locations where the flex rollers (1,8) on the other side of the rim (3) press against the rim (3).

## Description

The invention concerns a device in accordance with the preamble of claim 1. Such a device is known from the published patent application EP0360355A1. The disadvantage of the known device is that in the known device it is necessary to press sideways against the spokes to increase the tension in the spokes and decrease the tension in adjacent spokes. This pressing against the spokes might lead to deformation or damage of spokes, which is a disadvantage. A further disadvantage is that pressing sideways against small groups of spokes until all spokes are dealt with is very time consuming.

In order to overcome this disadvantage the device is in accordance with claim 1. Deforming the rim sideways between sets of rollers increases and decreases the tension in the spokes by simply rotating the wheel without touching the spokes. This stabilises the wheel as the decreased tension in the spokes makes it possible that nipples can rotate in the rim and this removes the torque in the spokes in a simple way and avoids rotation of nipples relative to the spokes during use. Further, the short period of high tension in the spokes causes burrs and similar local irregularities to disappear and reduces later changes in spoke tensions during use.

In accordance with an embodiment, the device is according to claim 2. This causes the flex rollers to press against the rim in even spread forces without damaging the rim.

In accordance with an embodiment, the device is according to claim 3. By positioning the two sets of flex rollers at a certain distance from each other, the rim deforms in the same way over its whole circumference as during rotation between the flex rollers. This results in the same tension changes in all spokes which is advantageous.

In accordance with an embodiment, the device is according to claim 4. By determining the rim diameter and the rim with the properties of the wheel can be determined. These properties make it possible to determine the adjustable distance for that wheel, either by collecting a previous determined value or by calculating an adjustable distance. In this way the proper adjustable distance ensures that the changes in the spoke tensions are sufficient and damage to the wheel is prevented.

In accordance with an embodiment, the device is according to claim 5. The cylindrical flex rollers have compact dimensions and are easy to align.

In accordance with an embodiment, the device is according to claim 6. The conical flex rollers give during rotation of the wheel a centring force on the wheel so that it maintains the position whereby the rotation axis of the wheel is more or less similar to the common line of the intersecting planes that encompass the rotation axes of the conical flex rollers.

In accordance with an embodiment, the device is according to claim 7. In this way, the positioning means can automatically position a wheel after it entered the device between the flex rollers.

In accordance with an embodiment, the device is according to claim 8. In this way, the four support rollers can grip the wheel and position it between the flex rollers, while at the same time positions of the support rollers determines the diameter of the rim.

In accordance with an embodiment, the device is according to claim 9. By rotating one flex roller the rim rotates between the two sets of flex rollers.

In accordance with an embodiment, the device is according to claim 10. By rotating the two flex rollers in a set of flex rollers the rim experiences a perfect torque from the driven flex rollers and the rim remains centred between the flex rollers without additional centring means such as the support rollers.

In accordance with an embodiment, the device is according to claim 11. Limiting the bending force on the rim prevents damage to the rim and/or the device in case some unexpected situation occurs or if special rims have a high risk of permanent deformation.

Hereafter the invention is explained by describing several embodiments of the invention with the aid of a drawing. In the drawing
Figure 1 shows a schematic section of a wheel mounted by four support rollers between two sets of flex rollers prior to elastic deformation,
Figure 2 shows a section of a wheel similar to the situation in figure 1 whereby the wheel is subject to elastic deformation,
Figure 3 shows the wheel of figures 1 and 2 in front view,
Figure 4 shows a perspective view of a device for stabilising a spoked wheel,
Figure 5 shows a perspective front view of a vertical frame of the device of figure 4,
Figure 6 shows a perspective back view of the vertical frame of the device of figure 4,
Figure 7 shows a perspective view of various parts acting on a wheel inside the device of figure 4,
Figure 8 shows a perspective view of a movable frame inside the device of figure 4, and
Figure 9 shows a perspective view of a wheel support rail in the device of figure 4.

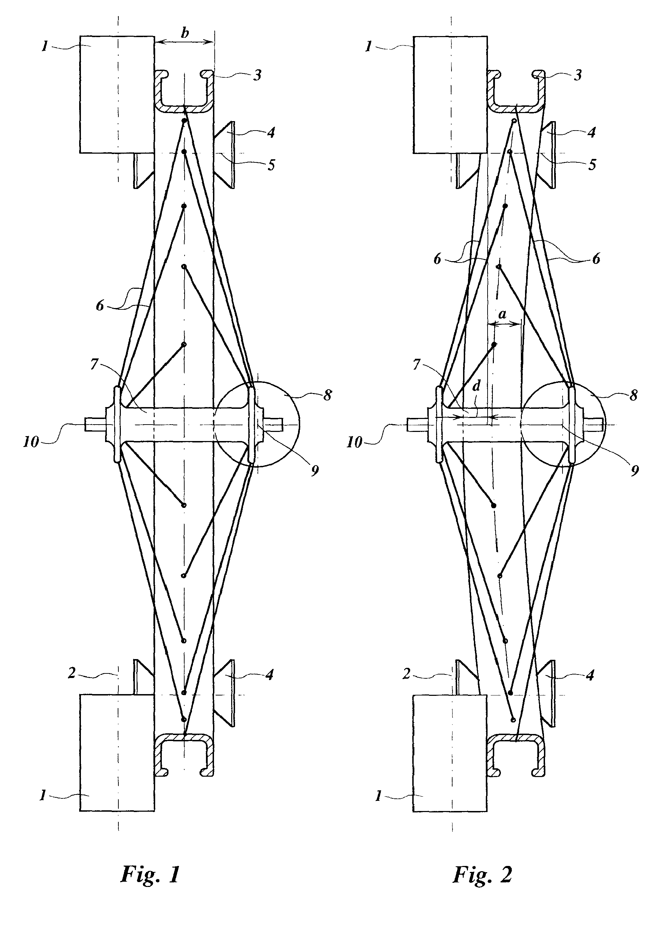

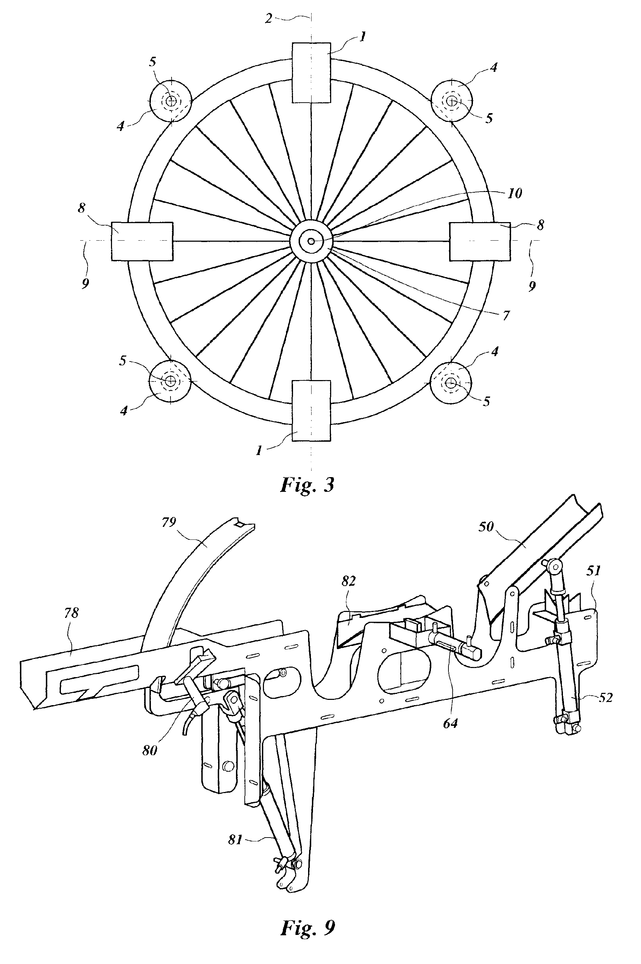

As shown in figures 1 - 3 a wheel comprises a rim 3 and a hub 7. Spokes 6 connect the rim 3 to the hub 7 whereby the spokes 6 are inserted through a hole(not shown) in the rim 3 and a nipple (not shown) is screwed on the spoke 6. When screwing the nipple on the spoke 6 the nipple is rotated and increased tension in the spoke 6 causes the end of the spoke 6 near the rim 3 to rotate too. Fastening the other end of the spoke 6 in the hub 7 prevents rotation of the spoke 6. This results in a torque in the spoke 6. This torque in the spoke 6 causes during use the nipple to rotate in the rim 3 and also relative movement between the spoke 6 and the nipple thereby changing the tension in the spoke 6. The invention aims to reduce or remove the torque in the spoke 6 and detwisting the spoke 6 so that during use the tension in the spoke 6 remains the same. A further aim of the invention is to increase the tension in a spoke 6 over a short period in order to remove irregularities that might change during use, such as burrs, in the hub 7, spokes 6, nipples, or the rim 3.

The wheel has a rotation axis 10 and the rim 3 has a rim width b. At one side of the wheel are two first flex rollers 1 with a common first roller axis 2 positioned at diagonally opposite sides against one side of the rim 3. At the other side of the wheel at diagonally opposite sides against the other side of the rim 3 are two second flex rollers 8 with a common second roller axis 9. The first flex rollers 1 press against the rim 3 halfway between the locations where the second flex rollers 8 press in opposite direction against the rim 3. The first flex rollers 1 and second flex rollers 8 have an resilient surface for instance of rubber so that the flex rollers 1, 8 do not damage the surface of the rim 3 while it is clamped between the flex rollers 1, 8 and it rotates around its rotation axis 10.

Four support rollers 4 with support roller axes 5 that are parallel to the rotation axis 10 position the rim 3 with the rotation axis 10 of the wheel intersecting the first roller axis 2 and the second roller axis 9. The support rollers 4 have a V-shaped groove, are more or less diabolo shaped, and are in axial direction resiliently mounted on the rotation axes 10. Because of the V-shaped groove, the support rollers 4 determine the axial position of the rim 3 and can move, hold and position the wheel between the first flex rollers 1 and second flex rollers 8. Because of the resilient mounting of the support rollers 4 the wheel can slightly move in axial direction as it is clamped between the flex rollers 1, 8.

Prior to starting the stabilising the wheel the support rollers 4 position the rim 3 between the flex rollers 1, 8 in such a way that the rotation axis 10 of the rim 3 intersects the rotation axes 2, 9 of the first and second flex rollers 1, 8. During rotation of the rim 3 between the first flex rollers 1 and the second flex rollers 8 the two first flex rollers 1 rotate in opposite direction and the two second flex rollers 8 rotate in opposite direction. If the distance between the surfaces of the first flex rollers 1 and the second flex rollers 8 is equal to rim width b, there is no deformation in the rim 3 during rotation of the rim 3. Reducing the distance between the first flex rollers 1 and the second flex rollers 8 to a roller distance a, as shown in figure 2, causes the flex rollers 1, 8 to elastically deform the rim 3. This deformation of the rim 3 increases the tension in the spokes 6 near a flex roller 1, 8 connected to the hub 7 at the side of the flex roller 1, 8. Simultaneously the spokes 6 connected to the hub 7 at the other side of the rim 3 away from the flex roller 1, 8 get a reduced tension or become free of any load. In that situation the tension in a spoke 6 is reduced or removed and the nipple on the spoke 6 can rotate easily in the rim 3 causing the torque in the spoke 6 to rotate the nipple in the rim 3. This reduces or removes the torque in these spokes 6. In addition, in the spokes 6 that get an increased tension irregularities such as burrs are pressed flat or removed in another way.

Rotating the rim 3 between the flex rollers 1, 8 at least half a revolution or 180 degrees increases and decreases the spoke tension in all spokes 6 in a wheel. A spoke 6 at the side opposite to where the flex roller 1,8 presses against the rim 3 approaching the flex roller 1, 8 experiences reduced or disappearing tension in the spoke 6 so that the nipple can rotate in the rim 3 and the torsion in the spoke 6 disappears. After the spoke 6 moves away from a flex roller 1, 8 the tension will return in the spoke 6 while the torque does not return.

In addition to reducing or removing the torque in the spokes 6 by rotating the wheel between the flex rollers 1, 8 a further improvement of the wheel occurs due to the increased tension in the spoke 6 that approaches a flex roller 1, 8 and that is connected to the hub 7 at the side of the flex roller 1, 8. This increased tension presses the nipple strongly against the rim 3 so that any burr and other similar irregularities are pressed flat and changes in the spoke tension caused by disappearing of the burrs or irregularities during the use of the wheel is reduced so that the spoke tensions during use are more stable.

In the embodiment shown in figures 1-3 the rim 3 is placed between two sets of flex rollers 1,8 whereby the first flex rollers 1 and the second flex rollers 8 have a cylindrical shape and the first roller axes 2 and the second roller axes 8 respectively are in one plane and are in line.

In a further embodiment (not shown) the first flex rollers 1 and the second flex rollers 8 have a conical shape whereby the surface of the flex roller that presses against the rim 3 is more or less perpendicular to the rotation axis 10. The rotation axes 2, 9 of the flex rollers 1, 8 at one side of the rim 3 are in one plane but not in line. In this embodiment, the shape of the flex rollers during rotation between the flex rollers 1, 8 cause a centring force on the rim 3 and so improves or ensures centring of the rim 3.

Gripping the rim 3 with one or both hands rotates the rim 3 between the flex rollers 1, 8. In a simple and manually operated installation, it is then possible to rotate the rim 3 over half a revolution so that the tension in all spokes 6 is increased and decreased and the wheel is stabilised.

In a further embodiment the rotating of the rim 3 can be effected by rotating one of the flex rollers 1, 8 for instance by a drive. As the three undriven flex rollers 1, 8 when rolling over the rim 3 have roll resistance, a resulting force on the rim 3 pushes the rim 3 sideways so that the rotation axis 10 does not intersect anymore with the first roller axis 2 and/or the second roller axis 9. This is undesirable so in this embodiment during deformation of the rim 3 the support rollers 8 and/or other centring means ensure that the rotation axis 10 remains near the line intersecting the first roller axis 2 and the second roller axis 9. In order to obtain this object it might be necessary during the rotation of the rim 3 over 180 degrees to interrupt the elastic deformation of the rim 3 one or more times. During each interruption the rotation of the rim 3 is stopped, the roller distance a between the first flex rollers 1 and the second flex rollers 8 is increased to more than the rim width b. The support rollers 8 or other centring means reposition the wheel so that the rotation axis 10 again more or less intersects the first roller axis 2 and the second roller axis 9. After this, the first flex rollers 1 and the second flex rollers 8 move towards each other so that the rim 3 again elastically deforms and the rotation of the rim 3 is resumed.

In a further embodiment a drive (not shown) drives the two flex rollers that are diagonally opposite of each other on the same side of the rim 3 in counter rotating direction. In this way a more or less perfect torque rotates the rim 3 and there are no sideway forces on the rim 3. In this embodiment the rim 3 can rotate uninterrupted over 180 degrees as the sideways movement of the rim 3 is negligible. If required, support rollers 8 prevent or correct occurring sideways movement of the rim 3.

During deformation of the rim 3 by the flex rollers 1,8 the distance between the first flex rollers 1 and the second flex rollers 8 is the roller distance a. The difference between the rim width b and the roller distance a determines a deformation distance d. Instead of the desired elastic deformation, permanent deformation of the rim 3 occurs if the deformation distance d is too large. The allowable maximum value of the deformation distance in order to ensure elastic deformation depends on the dimensions of the rim 3, such as the rim diameter, the rim width b, the length of the spokes 6 and of other properties of the rim 3 and the wheel. Such properties might include the construction of the rim 3, the dimensions of the hub 7, the length of the spokes 6 and the difference in length of the spokes 6 at the different sides of the hub 7. At a deformation distance d of 10-15 mm and the usual dimensions of spoked bicycle wheels sufficient elastic deformation occurs to stabilise the wheel without the risk of permanent deformation. Only in specific cases, the deformation distance d will be larger than 20 mm.

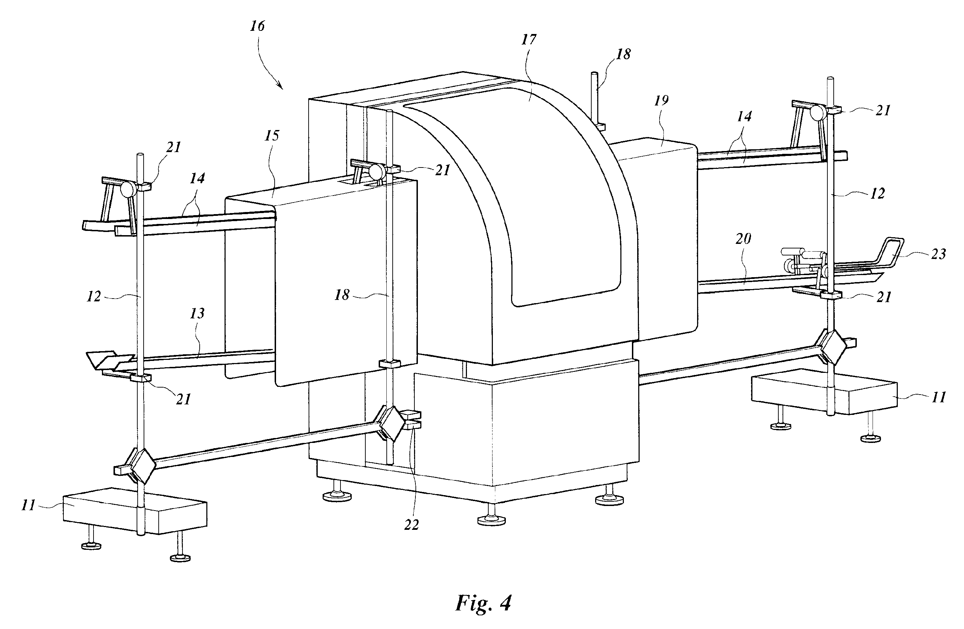

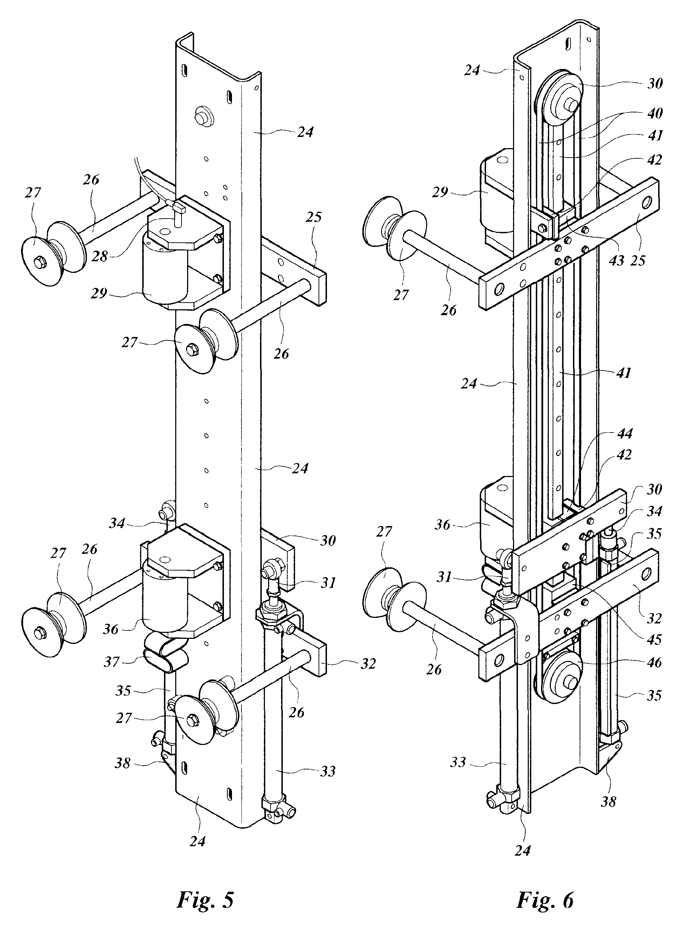

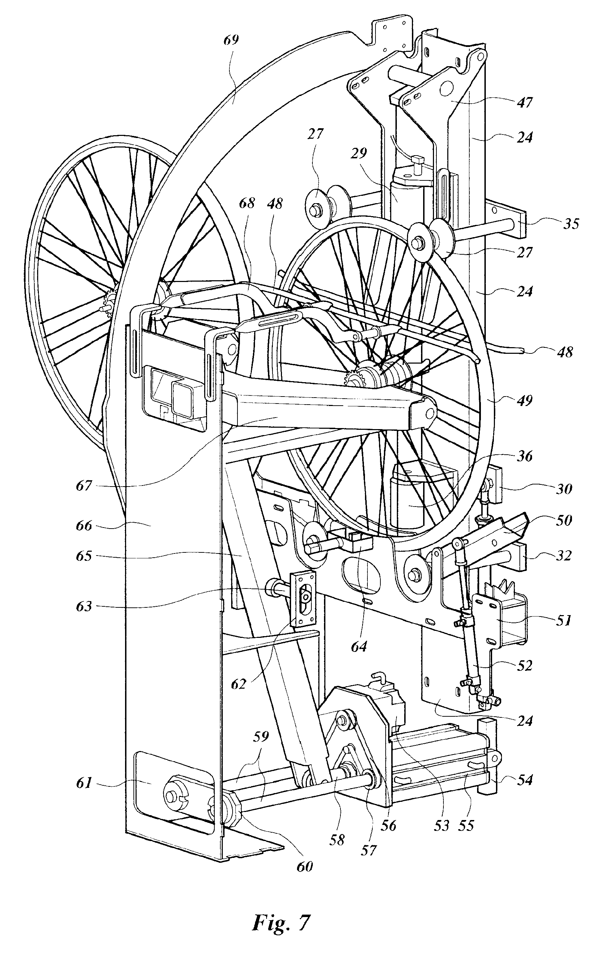

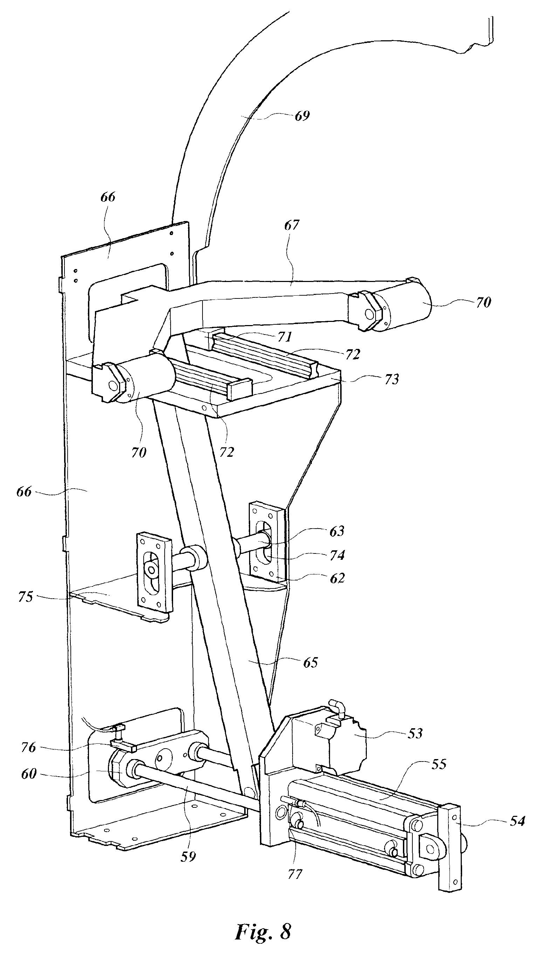

Figures 4-9 show a spoke stabilising machine 16 that can operate fully automaticly in a wheel assembly line. Spoked wheels are positioned on a wheel supply rail 13 that has a gradient so that the wheels roll into the spoke stabilising machine 16. A rail support 11 supports a vertical support 12 to which adjustable clamps 21 are mounted. The adjustable clamps 21 support the wheel supply rail 13 and wheel side supports 14 that maintain the wheels in upright position. The stabilising machine 16 has a bracket 22 that supports a machine-mounted support 18 to which two adjustable clamps 21 are mounted for supporting the wheel supply rail 13 and the wheel side supports 14. At the outlet side of the stabilising machine 16 is a wheel discharge rail 20 supported in a similar way with a gradient that lets wheels roll out of the stabilising machine 16 against a wheel stop 23 at the end of the wheel discharge rail 20.

In the shown embodiment, the spoke stabilising machine 16 is a standalone machine and an operator supplies wheels on the wheel supply rail 13 and removes wheels form the wheel discharge rail 20. In other embodiments, the wheel supply rail 13 and the wheel discharge rail 20 are connected to a rail system or to another supply system in the bicycle factory that connects the various machines in the factory and that loads and unloads the various machines automatically.

The inlet opening of the stabilising machine 16 has an inlet cover 15 placed over the wheel supply rail 13 so that an operator cannot reach into the stabilising machine 16 for safety reasons. For the same reason an outlet cover 19 is place over the wheel discharge rail 20. Preferably, the inlet cover 15 and the outlet cover 19 are transparent so that the operator can follow the progress of the operations inside the stabilising machine 16. In addition, the stabilising machine 16 has a window 17 that makes it possible to view the operations inside.

The stabilising machine 16 has a control panel (not shown) for activating an operating system that controls the machine. The operating system has a program and is connected to various sensors in the machine and if required is connected via a network to information sources such as a database that contains information on the properties of wheels that are to be detorqued in the stabilising machine 16.

The stabilising machine 16 comprises a base (not shown), a vertical frame 24 mounted at the back on top of the base and side plates 61 and a front plate 66 mounted at the front on top of the base. Coupling plates 69 are a continuation of the side plates 61 and couple the top of the vertical frame 24 to the side plates 61. The side plates 61 and the front plate 66 support a support plate 73 on which two rails 72 are mounted. Slides 71 can slide over the rails 72 and support a movable frame 67 that has two second flex rollers 70 with a common rotation axis and the movable frame 67 can press the second flex rollers 70 against the wheel to be stabilised. The lever 65 can swivel around a shaft 63 and some move the movable frame 67 and is coupled with one end to a hinge (not shown) to the movable frame 67 and with the other end to a piston bar 58 of a deformation cylinder 55. The shaft 63 can rotate in the slots 74 of the slotted plates 62. The slotted plates 62 are fastened to the side plates 61, a rib 75 is connected to the side plates 61 and the front plate 66 and reinforces the side plates 61 near the slotted plates 62. A bracket 54 fastens the deformation cylinder 55 to the base.

A stroke limiting plate 60 limits the stroke of the piston bar 58. A motor 53 that drives a toothed belt 56 can adjust the distance between the deformation cylinder 55 and the stroke limiting plate 60. The toothed belt 56 rotates rotatable nuts 57 mounted around spindles 59. The spindles 59 and the stroke limiting plate 60 are connected. A sensor 76 detects the extreme position of the stroke limiting plate 60 near the deformation cylinder 55 and a sensor 77 detects the rotation of the rotable nut 57 so that the control system knows the position of the stroke limiting plate 60. By fixating the end position of the piston bar 58 with the stroke limiting plate 60 the maximum horizontal stroke of the movable frame 67 is fix-ated.

The deformation cylinder 55 has provisions that can maximize the maximum force so that the maximum force of the second flex rollers 70 on the rim can be limited too. For this the deformation cylinder 55, which is activated by pressurized air, has a valve (not shown) that can limit the pressure of the air that moves the piston bar 58 outwards. The setting of this valve can be manually or the control system controls its setting in dependence of the type of wheel that is stabilised.

A wheel entering the stabilising machine 16 rolls from the wheel supply rail 13 onto an inlet rail 78, the inlet rail 78 is part of a wheel guidance frame 51. The wheel moves between two side support bars 48, a first side support frame 47 couples one side support bar 48 to the vertical frame 24 and a second side support frame 68 couples the side support bar 48 on the other side to the front plate 66. The wheel guidance frame 51 is fastened to the vertical frame 24. In the inlet rail 78 a wheel stop 79 stops the rolling movement of the wheel when a wheel being processed occupies the machine 16. After the machine 16 is ready for the next wheel a cylinder 81 moves the wheel stop 79 downwards so that the wheel rolls on the middle rail 82 until it rolls against the movable outlet rail 50. A sensor 80 detects the movement of the wheel towards the middle rail 82 and activates the wheel stop 79 so that the wheel stop 79 stops the next wheel and pushes the wheel that is on the middle rail 82 against the movable outlet rail 50. The middle rail 82 has a rim width sensor 64 that determines the width of the wheel on the middle rail 82 by clamping the rim and detecting the position of the clamp. After the wheel is stabilised the cylinder 52 moves the movable outlet rail 50 downwards and the wheel rolls out of the stabilising machine 16.

The vertical frame 24 has an upper first flex roller 29 and a lower first flex roller 36 with a common rotation axis. A roller drive coupling 37 can drive the lower first flex roller 36 and connects the lower first flex roller 36 to a motor (not shown). Four support rollers 27 can lift the wheel off the middle rail 82 and position it between the first flex rollers 29, 36 and the second flex rollers 70 in such a way that the centreline of the wheel perpendicularly intersects the common rotation axes of the first flex rollers 29, 36 and the second flex rollers 70. After the rim of the wheel is clamped between the first flex rollers 29, 36 and the second flex rollers 70 the motor drives the lower first flex roller 36 and a rotation sensor 28 detects the rotation of the upper first flex roller 29. This makes the control system aware of the rotation of the rim of the wheel, which proves that the wheel is mounted correctly between the flex rollers 29, 36, 70.

Support bars 26 connect the two support rollers 27 that are located above the wheel to an upper roller support 25 and the two support rollers 27 that are located below the wheel to a lower roller support 32. The upper roller support 25 can move with a slide 43 over a rail 41 mounted on the vertical frame 24 and the lower roller support 32 can move with a slide 45 over the rail 41. An intermediate plate 30 can move with a slide 44 over the rail 41. An upper pulley 39 is mounted above the rail 41, a lower pulley 46 is mounted below the rail 41 and an endless belt 40 is looped around both pulleys 39, 46. A clamp 42 couples the upper roller support 25 to the endless belt 40 at one side of the rail 41 and a similar clamp 42 couples the intermediate plate 30 to the endless belt 40 at the other side of rail 41. This causes the upper roller support 25 and the intermediate plate 30 to make opposite movements along the rail 41.

A first cylinder 33 is coupled to the lower roller support 32 and has a piston bar 31 coupled to the intermediate plate 30. A second cylinder 35 is also coupled with its piston bar 34 to the intermediate plate 30 and a bracket 38 couples the second cylinder 35 to the vertical frame 24. The second cylinder 35 has a sensor that determines the extension of the piston bar 34 from the cylinder 35 and so determines the height of the upper roller support 25. For lowering the upper roller support 25 the piston bar 34 in the second cylinder 35 is extended. By lowering the support rollers 27 that are coupled to the upper roller support 25 on the rim of the wheel that is positioned on the middle rail 82 the sensor in the second cylinder 35 determines the diameter of the wheel.

After lowering the upper support rollers 27 on the rim of the wheel the piston bar 34 extends from the second cylinder 35 and the piston bar 31 extends from the first cylinder 33. Now the first cylinder 33 retracts the piston bar 31 against the smaller force of the second cylinder 35. This moves the lower roller support 32 upwards and with that moves also the wheel and the upper roller support 25 upwards and as the upper roller support 25 is coupled to the intermediate plate 30 that moves downwards. In this way the wheel is lifted by the support rollers 27 so that the centreline of the wheel intersects and is perpendicular to the rotation axes of the first flex rollers 29,36 and second flex rollers 70. The first cylinder 33 can deliver more force than the second cylinder 35 as it has a larger diameter.

After the wheel is positioned between the first flex rollers 29,36 and the second flex rollers 70 with its rotation axis intersecting the rotation axes of the rollers the deformation cylinder 55 moves the movable frame 67 towards the wheel and the rim of the wheel is pressed between the sets of flex rollers 29,36,70 and deformed. the motor rotates the lower flex roller 36 and after rotating the wheel over a certain distance, for instance a quarter of a revolution, the motor stops and the deformation cylinder pulls the movable frame 67 away from the wheel so that the support rollers 27 can reposition the wheel so that its rotation axis intersects the rotation axes of the flex rollers 29, 36, 70 again. This sequence is repeated until the wheel has rotated at least over 180 degrees in deformed condition and all spokes were subjected to increased and decreased tension.

After the wheel is stabilised the support rollers 27 lower the wheel on the middle rail 82 and the cylinder 52 lowers the movable outlet rail 50 so that the stabilised wheel can roll out of the stabilising machine and the next wheel can be stabilised.

## Claims

1. Device for stabilizing a spoked wheel with a centreline (10) and spokes (6) mounted between a hub (7) and a rim (3) by screwing nipples on the spokes inserted through the rim comprising means for increasing and reducing the tension in the spokes **characterized in that** the means for increasing and reducing the tension comprises two sets of flex rollers (1,8;29,36,70) that can press in opposite direction parallel to the centreline (10) against the rim (3) wherein the flex rollers on one side of the rim press against the rim more or less halfway between the locations where the flex rollers on the other side of the rim press against the rim.

2. Device in accordance with claim 1, wherein the sets of flex rollers (1,8;29,36,70) on opposing sides of the rim (3) have contact areas directed towards the rim and the contact areas of the sets of flex rollers are in two planes perpendicular to the centreline (10).

3. Device in accordance with claim 1 or 2 comprising a frame (67) with the one set of flex rollers (70) and drive means (55) for positioning the frame at an adjustable distance (a) from the other set of flex rollers (29,36) during rotation of rim (3) .

4. Device in accordance with claim 3 comprising sensors (35,64) for determining the rim diameter and the rim width and an algorithm for determining the wheel type and collecting the adjustable distance (a) determined for that wheel type and/or an algorithm for calculating the adjustable distance based on the determined rim diameter and rim width.

5. Device in accordance with one of the previous claims comprising cylindrical flex rollers (1,8;29,36,70) wherein the two flex rollers in each set have a common rotation axis (2,9).

6. Device in accordance with one of the previous claims comprising conical flex rollers wherein the two flex rollers in each set have rotation axes lying in a common plane.

7. Device in accordance with one of the previous claims comprising a rail (82) with a stop (50) and positioning means (27) for lifting the wheel of the rail and positioning the wheel between the sets of flex rollers (1, 8; 29, 36, 70).

8. Device in accordance with claim 7 wherein the positioning means comprise four support rollers (24) that grip the rim around its circumference.

9. Device in accordance with one of the previous claims comprising drive means for rotating one flex roller (36).

10. Device in accordance with one of the previous claims comprising drive means for counterrotating the two flex rollers of a set flex rollers.

11. Device in accordance with one of the previous claims comprising a frame (67) with one set of flex rollers (70) and drive means (55) for pushing the frame with an adjustable maximum force towards the other set of flex rollers (29,36) during rotation of rim (3).
